**Europäisches Patentamt**

**European Patent Office**

**Office européen des brevets**

(19)

(11) Veröffentlichungsnummer: **0 204 658**
**B1**

(12) # EUROPÄISCHE PATENTSCHRIFT

(45) Veröffentlichungstag der Patentschrift:
**16.08.89**

(21) Anmeldenummer: **86810228.6**

(22) Anmeldetag: **28.05.86**

(51) Int. Cl.⁴: **C 08 G 59/40, C 09 D 3/58**

(54) **Härtbares Epoxidharz-Stoffgemisch.**

(30) Priorität: **03.06.85 CH 2337/85**

(43) Veröffentlichungstag der Anmeldung·
**10.12.86 Patentblatt 86/50**

(45) Bekanntmachung des Hinweises auf die Patenterteilung:
**16.08.89 Patentblatt 89/33**

(84) Benannte Vertragsstaaten:
**BE CH DE FR GB IT LI NL**

(56) Entgegenhaltungen:
**FR-A- 2 135 178**
**FR-A- 2 176 035**
**US-A- 3 894 113**

(73) Patentinhaber: **CIBA-GEIGY AG, Klybeckstrasse 141,
CH-4002 Basel (CH)**

(72) Erfinder: **Lauterbach, Horst, Dr., Im Mühleboden 78,
CH-4106 Therwil (CH)**

**Beschreibung**

Die Erfindung betrifft ein wasserfreies Epoxidharz-Stoffgemisch enthaltend einen Härter für das Epoxidharz auf der Basis von Dicyandiamid und Harnstoff und gegebenenfalls einen Härtungsbeschleuniger, sowie ein im wesentlichen wasserfreies Härtergemisch für Epoxidharze auf der Basis von Dicyandiamid und Harnstoff und gegebenenfalls einem Härtungsbeschleuniger.

Die Härtung von Epoxidharzen mit Dicyandiamid, gegebenenfalls in Anwesenheit von Härtungsbeschleunigern ist bekannt. Die japanische Kokai 78/90 344 z.B. beschreibt Epoxidharz-Stoffgemische, die Dicyandiamid als Härter und ein Gemisch aus N-Aryl-N',N'-dialkylharnstoff und Imidazolverbindungen als Beschleuniger enthalten.

Die US Patentschrift 2 713 569 beschreibt härtbare Epoxidharz-Stoffgemische enthaltend Harnstoff als Härter und gegebenenfalls Alkalimetallhydroxide oder -phenoxide als Härtungsbeschleuniger. Allerdings hat sich Harnstoff als Härter für Epoxidharze trotz seines niedrigen Preises und seiner toxikologischen Unbedenklichkeit nicht bewährt, weil es auch bei Einsatz bewährter Beschleuniger nicht ausreichend rasch mit den Epoxidgruppen reagiert und weil es, z.B. im Oberflächenschutz auch bei sehr hohen Einbrenntemperaturen nicht möglich war, technisch brauchbare Filme herzustellen.

Die deutsche Offenlegungsschrift 2 743 015 beschreibt ein Verfahren zum Härten von Epoxidharzen mit Cyanamid, indem eine wässrige Lösung von Cyanamid oder von einem Gemisch aus Cyanamid und Harnstoff im Harz homogen verteilt wird, und gegebenenfalls in Gegenwart von Beschleunigern, insbesondere von tertiären Aminen, ausgehärtet wird. Das Harz-Härter-Gemisch wird insbesondere dazu verwendet, Formteile aus faserverstärkten Epoxidharzen herzustellen.

Gegenstand der vorliegenden Erfindung sind wasserfreie härtbare Stoffgemische enthaltend

(a) ein Epoxidharz,

(b) als Härter für das Epoxidharz das Produkt erhalten durch (i) feines Homogenisieren von (1) Dicyandiamid und (2) Harnstoff indem (1) und (2) gemeinsam gemahlen werden oder in einem gemeinsamen Lösungsmittel gelöst werden, oder (ii) durch Zusammenschmelzen von (1) und (2) oder (iii) durch teilweise Umsetzung in einem gemeinsamen Lösungsmittel, wobei das Gewichtsverhältnis von (1) zu (2) zwischen 4 : 1 bis 1 : 4 liegt, und gegebenenfalls

(c) einen Härtungsbeschleuniger.

Die erfindungsgemässen Gemische eignen sich für die Herstellung geformter Gegenstände als Klebstoffe, Kitte, Dichtungsmassen, Einbettungs- und Isoliermassen für die Elektronik oder Matrixharze, und insbesondere für die Anwendung im Oberflächenschutz. Die ausgehärteten Produkte zeichnen sich durch vorzügliche mechanische Eigenschaften, insbesondere durch eine sehr gute Lösungsmittel- und Kochwasserbeständigkeit aus.

Die erfindungsgemässen Stoffgemische können vorzugsweise als Pulverlacke verwendet werden. Dabei weisen sie eine besonders vorteilhafte Relation zwischen Verlauf und Reaktivität auf, indem sie sich im Vergleich zu vorbekannten Systemen entweder bei gleich gutem Verlauf durch eine höhere Reaktivität, oder bei gleicher Reaktivität durch einen besseren Verlauf auszeichnen.

Als Epoxidharze (a) können die üblichen, für Pulverbeschichtungen geeigneten Epoxidharze verwendet werden. Solche Verbindungen sind beispielsweise in der DE-OS 2 838 841 beschrieben. Der Inhalt dieser Offenlegungsschrift ist somit Bestandteil vorliegender Erfindung.

Die verwendeten Harze haben vorzugsweise einen Epoxidgehalt von 0,5 bis 12 Äquivalenten pro kg. Die bevorzugten Epoxidharze sind bei Zimmertemperatur fest und können, falls erforderlich, durch Umsetzung mit z.B. einem zweiwertigen Phenol vorverlängert werden.

Besonders bevorzugt sind Epoxidharze, die im Durchschnitt mehr als eine Epoxidgruppe im Molekül enthalten und Polyglycidylderivate von Aromaten oder Heteroaromaten sind.

Besonders bevorzugte Harze sind gegebenenfalls vorverlängerte Polyglycidylether von 2,2-Bis(4'-hydroxyphenyl)propan (Bisphenol A), 2,2-Bis(3',5'-dibromo-4'-hydroxyphenyl)propan (Tetrabrombisphenol A), von Bis(4-hydroxyphenyl)methan (Bisphenol F) und von Novolaken, Polyglycidylderivate von 4,4'-Diaminodiphenylmethan, von 4,4'-Diamino-diphenylsulfon sowie von 2,4,6-Trihydroxy-1,3,5-triazin (Cyanursäure), wie z.B. Triglycidylisocyanurat, insbesondere gegebenenfalls vorverlängerte Polyglycidylether von Bisphenol A und Bisphenol F.

Als Komponente (a) kann auch ein Gemisch verschiedener Epoxidharze verwendet werden.

Geeigneterweise werden pro Epoxidäquivalent der Komponente (a) 10 - 100, vorzugsweise 15 - 60, insbesondere 20 - 35 g der Komponente (b) verwendet. Dabei ist das Gewichtsverhältnis von Dicyandiamid zu Harnstoff vorzugsweise zwischen 2 : 1 bis 1 : 3.

Die Komponente (b) wird z.B. so hergestellt, dass Dicyandiamid und Harnstoff unter Rühren und Erhitzen auf etwa 140 - 150°C zusammengeschmolzen werden, die entstandene klare Schmelze abkühlen gelassen, und die so erhaltene spröde Masse zermahlen wird. Die Homogenisierung von Dicyandiamid und Harnstoff kann auch in einem Extruder durchgeführt werden. Falls gewünscht, können auch Dicyandiamid und Harnstoff in einem gemeinsamen Lösungsmittel, z.B. in Ethanol oder in Ethylenglykolmonomethylether, gegebenenfalls unter Erhitzen gelöst und gegebenenfalls teilweise umgesetzt werden, und das Lösungsmittel dann auf geeignete Weise entfernt werden. Die verbliebene feste Härtermasse wird wiederum zermahlen.

Vorzugsweise wird die Komponente (b) durch gemeinsames Vermahlen von Dicyandiamid und Harnstoff hergestellt.

Um den Mahlvorgang zu erleichtern, können Mahlhilfsmittel, wie z.B. Kreidemehl, Schwerspat oder Talkum, verwendet werden. Dabei kann die eingesetzte Menge des Mahlhilfsmittels ein Vielfaches z.B. bis zwanzigfach, des Gemisches, das gemahlen wird, betragen. Um eine geeignete Homogenisierung von Dicyandiamid und Harnstoff im Härtergemisch zu erreichen, wird der Mahlvorgang vorzugsweise so lange fortgesetzt, bis ca. 95% der Teilchen eine Korngrösse von weniger als 100 µm, insbesondere weniger als 40 µm aufweisen.

Selbstverständlich können mit dem obigen Härtergemisch auch andere dem Fachmann bekannte Härter kombiniert werden, wie z.B. aliphatische, cycloaliphatische, aromatische und heterocyclische Amine, wie Bis(4-aminphenyl)methan, Anilin-Formaldehyd-Harze, Bis(4-aminophenyl)sulfon, Propan-1,3--diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)propan und 3-Aminomethyl-3,5,5-trimethylcyclohexylamin (Isophorondiamin), Polyaminoamide, wie beispielsweise solche aus aliphatischen Polyaminen und dimerisierten oder trimerisierten Fettsäuren, Polyphenole, wie Resorcin, Hydrochinon, 2,2-Bis(4-hydroxyphenyl)-propan (Bisphenol A) und Phenol-Aldehyd-Harze, Polythiole, wie die im Handel unter der Bezeichnung «Thiokole» erhältlichen Polythiole, Polycarbonsäuren und ihre Anhydride, wie z.B. Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon-3,3'-4,4'-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)-phenol], Imidazone oder Mannichbasen; Alkalimetallalkoholate (z.B. Na-Alkoholat von 2,4-Dihydroxy-3-hydroxymethylpentan), Zinnsalze von Alkansäuren (z.B. Zinnoctanoat), Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden.

Falls zweckmässig kann das erfindungsgemässe Stoffgemisch vorzugsweise auch einen Härtungsbeschleuniger (c) enthalten. Die zu verwendende Menge des Beschleunigers ist dem Fachmann bekannt und hängt vom Verwendungszweck des Stoffgemisches ab. Geeigneterweise können pro 100 Gewichtsteile der Komponente (b) 0 - 35, vorzugsweise 5 - 20, besonders bevorzugt 8 - 15 Gewichtsteile des Härtungsbeschleunigers (c) eingesetzt werden. Als Beschleuniger kommen alle Substanzen in Frage, die die Reaktion zwischen Epoxiden und Aminen katalysieren, wie z.B. tertiäre Amine, quaternäre Ammoniumverbindungen, Alkalimetallalkoholate, Tetramethylguanidin, 2,4,6-Trisdimethylaminomethylphenol, Imidazol und insbesondere Imidazolderivate, vorzugsweise 2-Methyl- oder 2-Ethylimidazol. Es können auch mehrere Beschleuniger zusammen verwendet werden.

Der Beschleuniger kann zum erfindungsgemässen Stoffgemisch gleichzeitig mit dem Zusammenmischen der Komponenten (a) und (b) beigefügt werden. Vorzugsweise wird er aber in Form eines «Master Batch» (Wirkstoffkonzentrats) in einer kleineren Menge des Epoxidharzes, oder insbesondere bereits mit der Komponente (b) vermischt beigegeben. Dabei kann der Beschleuniger geeigneterweise schon in die Schmelze oder in die Lösung von Dicyandiamid und Harnstoff zugegeben werden.

Je nach Natur des verwendeten Härtungsmittels kann die Härtung bei tieferen oder bei höheren Temperaturen vorgenommen werden. Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte «B-Stufenharze») und eignen sich z.B. für Pressmassen, Sinterpulver oder Prepregs.

Die erfindungsgemässen härtbaren Mischungen können ferner noch Plastifizierungsmittel, wie Dibutylphthalat, Dioctylphthalat oder Trikresylphosphat, oder Additive erhalten, wie Streckmittel, Füllstoffe, Verstärkungsmittel, Färbemittel, Fliessmittel und Formtrennmittel. Geeignete Streckmittel, Füllstoffe und Verstärkungsmittel sind beispielsweise Asbest, Asphalt, Bitumen, Glasfasern, Textilfasern, Kohlenstoff- oder Borfasern, Glimmer, Tonerde, Gips, Titandioxid, Kreise, Quarzmehl, Cellulose, Kaolin, gemahlener Dolomit, Wollastonit, Kieselerde mit grosser spezifischer Oberfläche (erhältlich unter dem Handelsnamen «Aerosil»), mit langkettigen Aminen modifizierte Tonerde (erhältlich unter dem Handelsnamen «Betone»), gepulvertes Polyvinylchlorid, Polyolefin oder Aminoplaste, Metallpulver, wie Aluminium- oder Eisenpulver. Flammschutzmittel, wie Antimontrioxid, können ebenfalls den härtbaren Mischungen zugegeben werden.

Falls die erfindungsgemässen Stoffgemische als Pulverlacke verwendet werden, können den Pulverlacken noch weitere in der Lackindustrie übliche Zusätze, wie beispielsweise Lichtschutzmittel, und insbesondere Entgasungsmittel, Verlaufsmittel und/oder Pigmente beigegeben werden.

Verlaufsmittel sind z.B. Polyvinylacetale, wie Polyvinylbutyral («Movital» B 30 H® der HOECHST), Polyethylenglykol, Polyvinylpyrrolidon, Glycerin, Neopentylglykol, Acryl-Mischpolymerisate, wie «Modaflow»® oder «Acrylron» MFP® der MONSANTO bzw. der PROTEX, sowie «Acronal» 4F® der Firma BASF und «Uresin B® der Firma HOECHST (ein Carbamidsäureharz aus Butylurethan und Formaldehyd).

Als Entgasungsmittel wird vorzugsweise Benzoin eingesetzt.

Die Pulverlacke können durch einfaches Mischen der Bestandteile, z.B. in einer Kugelmühle, hergestellt werden. Eine andere Möglichkeit der Herstellung besteht darin, dass man die Bestandteile zusammen schmilzt, vorzugsweise in einem Extruder, wie z.B. in einem Buss-Kokneter, und dann die abgekühlte Masse zerkleinert. Die Mischungen weisen vorzugsweise eine Partikelgrösse im Bereich von 0,015 bis 500 µm, und insbesondere von 10 - 75 µm, auf.

Gegenstand der Erfindung ist auch die Verwendung des erfindungsgemässen Stoffgemisches zur Herstellung von vernetzten Produkten.

Dabei wird das Stoffgemisch z.B. auf den zu beschichtenden Gegenstand appliziert und auf mindestens 120°C, vorzugsweise auf 150 - 250°C, erhitzt, um das Harz auszuhärten.

Die Erfindung betrifft auch Formteile und Überzüge, hergestellt durch Härtung des erfindungsgemässen Stoffgemisches.

Ein weiterer Gegenstand der Erfindung ist ein wasserfreies Härtergemisch für Epoxidharze bestehend aus

(b) dem Produkt erhalten, durch (i) feines Homogenisieren von (1) Dicyandiamid und (2) Harnstoff indem (1) und (2) gemeinsam gemahlen werden oder in einem gemeinsamen Lösungsmittel gelöst werden, oder (ii) durch Zusammenschmelzen von (1) und (2) oder (iii) durch teilweise Umsetzung in einem gemeinsamen Lösungsmittel, wobei das Gewichtsverhältnis von (1) zu (2) zwischen 4 : 1 bis 1 : 4 liegt und gegebenenfalls

(c) einem Härtungsbeschleuniger.

In den folgenden Beispielen werden einige erfindungsgemässe Stoffgemische, deren Anwendung und Eigenschaften illustriert. Bei den in den Beispielen angegebenen Mengen der Einzelkomponenten handelt es sich um Gewichtsteile.

*Beispiel 1*

*Herstellung einer Härterzusammensetzung*

Die Härterzusammensetzungen der Tabelle 1 werden wie folgt hergestellt:

*1A - 1D.* Alle Komponenten werden gemeinsam in einen 1,2 l fassenden Reaktionskolben eingefüllt, welcher mit einem Rührer ausgestattet ist. Unter langsamen Rühren wird mit einem Heizbad auf 140 bis 150°C aufgeheizt. Es entsteht eine dünnflüssige klare Schmelze. Die Schmelze lässt man in dünner Schicht abkühlen. Die so entstehende spröde Masse wird in einer Labormühle gemahlen.

*1E.* Sämtliche Komponenten werden in einem 1 l Reaktionskolben unter Rühren bei 30 - 60°C in 300 ml Wasser gelöst. Das Lösungsmittel wird dann unter Vakuum entfernt und die erhaltenen Kristalle in einer Labormühle gemahlen.

*1F.* Alle Komponenten werden gemeinsam 24 Std. in einer Kugelmühle gemahlen.

TABELLE 1

| Beispiel | 1 A | 1 B | 1 C | 1 D | 1 E | 1 F |
|---|---|---|---|---|---|---|
| Dicyandiamid | 48,4 | 50,8 | 27,4 | 48,4 | 44,7 | 21,8 |
| Harnstoff | 38,7 | 40,6 | 64,0 | 38,7 | 44,7 | 21,8 |
| 2-Methylimidazol | 12,9 | 8,6 | 8,6 | — | 10,6 | 5,1 |
| 2-Ethylimidazol | — | — | — | 12,9 | — | — |
| Millicarb[1] | — | — | — | — | — | 51,3 |
| | 100,0 | 100,0 | 100,0 | 100,0 | 100,0 | 100,0 |

[1] Kreidemehl der Fa. Plüss (Oftringen, CH); dient als Mahlhilfe

*Beispiel 2*

*Herstellung eines Pulverlackes*

Die in der Tabelle 2 genannten Komponenten werden gemeinsam während 15 min in einem Rhönradmischer gemischt. Das Gemisch wird bei 80 - 100°C in einem Extruder homogenisiert, gekühlt und anschliessend bis zu einer mittleren Korngrösse von ca. 50 µm gemahlen. Danach wird das Pulver mit einer elektrostatischen Pulverspritzpistole auf ein gereinigtes Aluminiumblech aufgetragen und 15 min bei 150°C gehärtet. Der entstehende Lackfilm hat eine Dicke von ca. 60 µm. Die Eigenschaften sind in Tabelle 3 zusammengestellt.

TABELLE 2

| Beispiel | | 2 A | 2 B | 2 C | 2 D |
|---|---|---|---|---|---|
| Epoxidharz[1] | | 640 | 640 | 640 | 640 |
| Härter | 1 A | 25,6 | | | |
| | 1 B | | 25,6 | | |
| | 1 C | | | 25,6 | |
| | 1 D | | | | 25,6 |
| Benzoin | | 1,4 | 1,4 | 1,4 | 1,4 |
| $TiO_2$ | | 333 | 333 | 333 | 333 |

[1] Epoxidharz speziell für Pulverlacke, Basis Bisphenol-A.
Epoxidzahl = 1,55 val/kg
Erweichungspunkt (DIN 51 920) = 89°C [enthält 1% Uresin B® (ein Carbaminsäureesterharz aus Butylurethan und Formaldehyd) und 1% Acronal 4F® (niederviskose Polyacrylsäurebutylester) der Firmen Hoechst, bzw. BASF, als Verlaufsmittel].

## TABELLE 3

| Beispiel | | 2 A | 2 B | 2 C | 2 D |
|---|---|---|---|---|---|
| Minimal nötige Einbrenntemperatur bei einer Einbrennzeit von 15 min | (°C) | 115 | 125 | 130 | 120 |
| Erichsentiefziehtest (DIN 53 156) | (mm) | >9 | >9 | >9 | >9 |
| Schlagtiefung rückseitig[1] | (cm·kg) | >160 | >160 | >160 | >160 |
| Verlauf | | sehr gut | ausgez. | ausgez. | ausgez. |
| Kochwassertest | (6 h) | i.O. | einzelne kl. Blasen | i.O. | einzelne[2] kl. Blasen |
| Gelbwert (DIN 6167) nach 10 min 170°C | | 2,5 | 1,5 | 3,5 | 2,0 |

[1] Auf die beschichteten Aluminiumbleche wird von hinten aus bestimmter Höhe ein Stempel mit einem bekannten Gewicht fallengelassen. Der erhaltene Wert, Höhe mal Gewicht, zeigt den grössten Schlag an, bei dem die Beschichtung noch unbeschädigt bleibt.

[2] Nur mit Lupe sichtbar.

*Beispiel 3*

In einer Kugelmühle von 4,5 l Inhalt, welche mit 2,8 kg Porzellankugeln (Durchmesser 1-4 cm) bestückt ist, wird folgendes Gemisch gemahlen:

| | |
|---|---|
| 218,8 g | Harnstoff |
| 218,8 g | Dicyandiamid |
| 52,6 g | 2-Methylimidazol |
| 9,8 g | Neopentylglykol |
| 500,0 g | Kreidemehl Millicarb |
| 1000,0 g | |

Nach 15 Stunden Mahldauer wird eine Kornfeinheit von 74% < 80 µm erreicht.

Mit diesem Härter wird ein Pulverlack hergestellt wie in Beispiel 2 beschrieben, jedoch mit folgender Zusammensetzung:

| | |
|---|---|
| Epoxidharz gemäss Beispiel 2 | 640,0 g |
| Härter | 51,2 g |
| Benzoin | 1,4 g |
| TiO₂ | 307,4 g |

Die resultierenden Filmeigenschaften

| | | |
|---|---|---|
| Minimal nötige Einbrenntemperatur bei einer Einbrennzeit von 14 min (°C) | | 125 |
| Erichsentiefziehtest (DIN 53 156) | (mm | >9 |
| Schlagtiefung rückseitig | (cm·kg) | >160 |
| Verlauf | | ausgez. |
| Kochwassertest | (6 h) | i.O. |
| Gelbwert (DIN 6167) nach 10 min 170°C | | 2,5 |

**Patentansprüche**

1. Wasserfreies härtbares Stoffgemisch enthaltend
 (a) ein Epoxidharz,
 (b) als Härter für das Epoxidharz das Produkt erhalten durch (i) feines Homogenisieren von (1) Dicyandiamid und (2) Harnstoff indem (1) und (2) gemeinsam gemahlen werden oder in einem gemeinsamen Lösungsmittel gelöst werden, oder (ii) durch Zusammenschmelzen von (1) und (2) oder (iii) durch teilweise Umsetzung in einem gemeinsamen Lösungsmittel, wobei das Gewichtsverhältnis von (1) zu (2) zwischen 4 : 1 bis 1 : 4 liegt, und gegebenenfalls
 (c) einen Härtungsbeschleuniger.

2. Stoffgemisch nach Anspruch 1, welches ein Pulverlack ist.

3. Stoffgemisch nach Anspruch 1, worin die Komponente (a) im Durchschnitt mehr als eine Epoxidgruppe im Molekül enthält, und vorzugsweise ein Polyglycidylderivat eines Aromaten oder eines Heteroaromaten ist.

4. Stoffgemisch nach Anspruch 3, worin die Komponente (a) bei Zimmertemperatur fest ist und ein gegebenenfalls vorverlängerter Polyglycidylether von 2,2-Bis(4'-hydroxyphenyl)-propan (Bisphenol A) von Bis(4-hydroxyphenyl)methan (Bisphenol F) ist.

5. Stoffgemisch nach Anspruch 1, worin 10 - 100, vorzugsweise 15 - 60 g der Komponente (b) pro Epoxidäquivalent der Komponente (a) vorliegen.

6. Stoffgemisch nach Anspruch 5, worin das Gewichtsverhältnis von Dicyandiamid zu Harnstoff der Komponente (b) zwischen 2 : 1 bis 1 : 3 liegt.

7. Stoffgemisch nach Anspruch 1, worin die Komponente (b) durch gemeinsames Vermahlen von Dicyandiamid und Harnstoff hergestellt wird.

8. Stoffgemisch nach Anspruch 1, welches pro 100 Gewichtsteile der Komponente (b) 0 bis 35, vorzugsweise 5 bis 20 Gewichtsteile des Härtungsbeschleunigers (c) enthält.

9. Stoffgemisch nach Anspruch 8, worin der Härtungsbeschleuniger (c) ein Imidazolderivat, insbesondere 2-Methyl- oder 2-Ethylimidazol ist.

10. Stoffgemisch nach Anspruch 2, welches zusätzlich zu den Komponenten (a) und (c) noch ein Entgasungsmittel, ein Verlaufsmittel und/oder ein Pigment enthält.

11. Verwendung des Stoffgemisches nach Anspruch 1 zur Herstellung von vernetzten Produkten.

12. Wasserfreies Härtergemisch für Epoxidharze bestehend aus

(b) dem Produkt erhalten durch (i) feines Homogenisieren von (1) Dicyandiamid und (2) Harnstoff indem (1) und (2) gemeinsam gemahlen werden oder in einem gemeinsamen Lösungsmittel gelöst werden oder (ii) durch Zusammenschmelzen von (1) und (2) oder (iii) durch teilweise Umsetzung in einem gemeinsamen Lösungsmittel, wobei das Gewichtsverhältnis von (1) zu (2) zwischen 4 : 1 bis 1 : 4 liegt und gegebenenfalls

(c) einem Härtungsbeschleuniger.

### Claims

1. An anhydrous curable composition containing

(a) en epoxy resin

(b) as hardener for the epoxy resin, the product obtained (i) by finely homogenising (1) dicyandiamide and (2) urea by grinding (1) and (2) together or dissolving (1) and (2) in a common solvent, or (ii) by melting (1) and (2) together or (iii) by partially reacting (1) and (2) in a common solvent, the weight ratio of (1) to (2) being between 4 : 1 to 1 : 4, and, optionally,

(c) a curing accelerator.

2. A composition according to claim 1, which is a powder coating composition.

3. A composition according to claim 1, wherein the component (a) contains on average more than one epoxy group in the molecule and is preferably a polyglycidyl derivative of an aromatic or of a heteroaromatic compound.

4. A composition according to claim 3, wherein the component (a) is solid at room temperature and is a non-advanced or advanced polyglycidyl ether of 2,2-bis(4'-hydroxyphenyl)propane (bisphenol A) or of bis(4-hydroxyphenyl)methane (bisphenol F).

5. A composition according to claim 1, wherein 10 to 100, preferably 15 to 60 g, of the component (b) are present per epoxide equivalent of the component (a).

6. A composition according to claim 5, wherein the weight ratio of dicyandiamide to urea of the component (b) is between 2 : 1 to 1 : 3.

7. A composition according to claim 1, wherein the component (b) is prepared by grinding dicyandiamide and urea together.

8. A composition according to claim 1, which contains 0 to 35, preferably 5 to 20, parts by weight of the curing accelerator (c) per 100 parts by weight of the component (b).

9. A composition according to claim 8, wherein the curing accelerator (c) is an immidazole derivative, in particular 2-methylimidazole or 2-ethylimidazole.

10. A composition according to claim 2, which contains, in addition to the components (a) and (b), a deaerating agent, a levelling agent and/or a pigment.

11. Use of a composition according to claim 1 for the preparation of crosslinked products.

12. An anhydrous mixture of hardeners for epoxy resins, which mixture comprises

(b) the product obtained (i) by finely homogenising (1) dicyandiamide and (2) urea by grinding (1) and (2) together or dissolving (1) and (2) in a common solvent, or (ii) by melting (1) and (2) together or (iii) by partially reacting (1) and (2) in a common solvent, the weight ratio of (1) to (2) being between 4 : 1 to 1 : 4, and, optionally,

(c) a curing accelerator.

### Revendications

1. Mélange anhydre qui contient:

(a) une résine époxydique,

(b) comme durcisseur pour la résine époxydique le produit que l'on a obtenu: (i) par homogénisation fine de cyanoguanidine (1) et d'urée (2), cela en broyant ensemble (1) et (2) ou en les dissolvant dans un solvant commun, ou (ii) par fusion conjointe (1) et (2), ou (iii) par réaction partielle dans un solvant commun, le rapport pondéral de () à (2) étant compris entre 4 : 1 et 1 : 4, et éventuellement

(c) un accélérateur de durcissement.

2. Mélange selon la revendication 1 qui est une peinture poudre ou un vernis poudre.

3. Mélange selon la revendication 1 dans lequel la composante (a) contient en moyenne plus d'un radical époxy par molécule et est de préférence un dérivé polyglycidylique d'un composé aromatique ou d'un composé hétérocyclique aromatique.

4. Mélange selon la revendication 3 dans lequel la composante (a) est solide à la température ambiante et est un éther polyglycidylique, éventuellement préallongé, du bis-(hydroxy-4 phényl)-2,2 propane (bisphénol A) ou du bis-(hydroxy-4 phényl)-méthane (bis-phénol F).

5. Mélange selon la revendication 1 dans lequel il y a de 10 à 100 g de la composante (b), de préférence de 15 à 60 g, par équivalent d'époxy de la composante (a).

6. Mélange selon la revendication 5 dans lequel le rapport pondéral de la cyanoguanidine à l'urée de la composante (b) est compris entre 2 : 1 et 1 : 3.

7. Mélange selon la revendication 1 dans lequel la composante (b) est préparée par broyage conjoint de la cyanoguanidine et de l'urée.

8. Mélange selon la revendication 1 qui contient, pour 100 parties en poids de la composante (b), de 0 à 35 parties en poids de l'accélérateur de durcissement (c), de préférence de 5 à 20 parties en poids.

9. Mélange selon la revendication 8 dans lequel l'accélérateur de durcissement (c) est un dérivé de l'imidazole, plus particulièrement le méthyl-2 ou l'éthyl-2 imidazole.

10. Mélange selon la revendication 2 qui, en plus des composantes (a) et (c), contient un agent de dégazage, un agent de nivellement et/ou un pigment.

11. Application du mélange selon la revendication 1 à la fabrication de produits réticulés.

12. Mélange durcisseur anhydre pour résines époxydiques, mélange qui est constitué:

(b) du produit que l'on a obtenu: (i) par homogénisation fine de cyanoguanidine (1) et d'urée (2), cela en broyant ensemble (1) et (2) ou en les dissolvant dans un solvant commun, ou (ii) par fusion conjointe de (1) et (2), ou (iii) par réaction partielle dans un solvant commun, le rapport pondéral de () à (2) étant compris entre 4 : 1 et 1 : 4, et éventuellement

(c) un accélérateur de durcissement.